# EUROPEAN PATENT APPLICATION

(11) **EP 2 657 807 A2**
(43) Date of publication of application: **30.10.2013**
(21) Application number: 13165020.2
(22) Date of filing: 23.04.2013
(51) Int. Cl.: G06F 1/16

(54) **Holder for portable electronic device**

(30) Priority: 27.04.2012 TW 101208015; 27.04.2012 TW 101208017
(71) Applicant: Chi Mei Communication Systems, Inc., New Taipei City 236 (TW)
(72) Inventor: Lee, Chueh, New Taipei (TW)
(74) Representative: Gray, John James

(57) **Abstract**

A foldable holder for holding and supporting a portable electronic device includes at least one sheet. A base plate, a first main supporting plate, a second main supporting plate, two first side supporting plates, and two second side supporting plates located on the at least one sheet. The base plate, the first main supporting plate and the second main supporting plate are foldable relative to each other. When the holder is folded, the base plate, the first main supporting plate, the first side supporting plates, and the second side supporting plates cooperatively form a three-dimensional structure that can support the portable electronic device at an angle relative to the at least one sheet without collapsing.

## Description

### Field

### BackGround

Holders are widely used to protect portable electronic devices and support the portable electronic device for a user to, for example, read an eBook or watch video. However, it can be difficult to carry the holder and the electronic device at the same time. Therefore, there is room for improvement within the art.

### Summary

According to a first aspect of the disclosure, a holder is provided for holding and supporting a portable electronic device. The holder comprises at least one sheet. A base plate, a first main supporting plate, a second main supporting plate, two first side supporting plates, and two second side supporting plates are located on the at least one sheet; the base plate, the first main supporting plate and the second main supporting plate are foldable relative to each other, the two first side supporting plates are symmetrically positioned on opposite sides of the first main supporting plate, the two second side supporting plates are symmetrically positioned on opposite sides of the second main supporting plate, when the holder is folded, the base plate, the first main supporting plate, the second main supporting plate, the first side supporting plates, and the second side supporting plates cooperatively form a three-dimensional structure that can support the portable electronic device at an angle relative to the at least one sheet without collapsing.

According to a second aspect of the disclosure, a foldable holder is provided for holding and supporting a portable electronic device. The holder comprises a first outer sheet and a second outer sheet connected to the first outer sheet. A receiving space is formed between the second outer sheet and the first outer sheets for receiving the portable electronic device. An entrance is defined to communicate with the receiving space. The entrance allows the portable electronic device to be inserted into the receiving space. A base plate, a first main supporting plate, a second main supporting plate, two first side supporting plates, and two second side supporting plates are located on the second outer sheet; the base plate, the first main supporting plate and the second main supporting plate are folded relative to each other, the two first side supporting plates are symmetrically positioned on opposite sides of the first main supporting plate, the two second side supporting plates are symmetrically positioned on opposite sides of the second main supporting plate; a latching piece is formed on the base plate, the latching piece has a bendable portion; the first main supporting plate, the second main supporting plate, the two first side supporting plates, and the two second side supporting plates are folded relative to each other until the second main supporting plate is held by the latching piece, the first main supporting plate, the second main supporting plate, the two first side supporting plates, and the two second side supporting plates cooperatively form a three-dimensional structure that can support the portable electronic device at an angle relative to the second outer sheet without collapsing.

### BRIEF DESCRIPTION OF THE DRAWINGS

Many aspects of the holder can be better understood with reference to the following drawings. The components in the drawings are not necessarily drawn to scale, the emphasis instead being placed upon clearly illustrating the principles of the holder.

FIG. 1 is an isometric view of a holder, in accordance with a first exemplary embodiment.

FIG. 2 is similar to FIG. 1, but shown from another aspect.

FIG. 3 is an isometric view of the holder, showing the holder for receiving a portable electronic device.

FIG. 4 is similar to FIG. 2, showing the holder in a state of being partially folded.

FIG. 5 is similar to FIG. 4, showing the holder folded as a support.

FIG. 6 is similar to FIG. 5, showing the latching portion of the holder to be bent.

FIG. 7 shows the holder supporting the portable electronic device in a first state.

FIG. 8 shows the holder supporting the portable electronic device in a second state.

FIG. 9 is an isometric view of a holder, in accordance with a second exemplary embodiment.

FIG. 10 is similar to FIG. 9, but shown from another aspect.

FIG. 11 is an isometric view of the holder, showing the holder for receiving a portable electronic device.

FIG. 12 is similar to FIG. 10, showing the holder in a state of being partially folded.

FIG. 13 is similar to FIG. 12, showing the holder folded as a support.

FIG. 14 is similar to FIG. 13, showing the latching portion of the holder to be bent.

FIG. 15 shows the holder supporting the portable electronic device in a first state.

FIG. 16 shows the holder supporting the portable electronic device in a second state.

### DETAILED DESCRIPTION

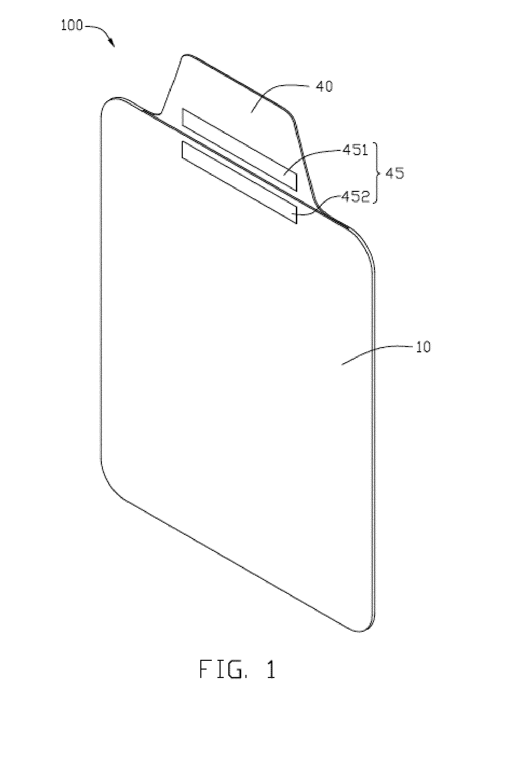

FIGS. 1-2, and 7 show an exemplary embodiment of a holder 100. The holder 100 can receive and protect a portable electronic device 200, and can also support and hold the portable electronic device 200.

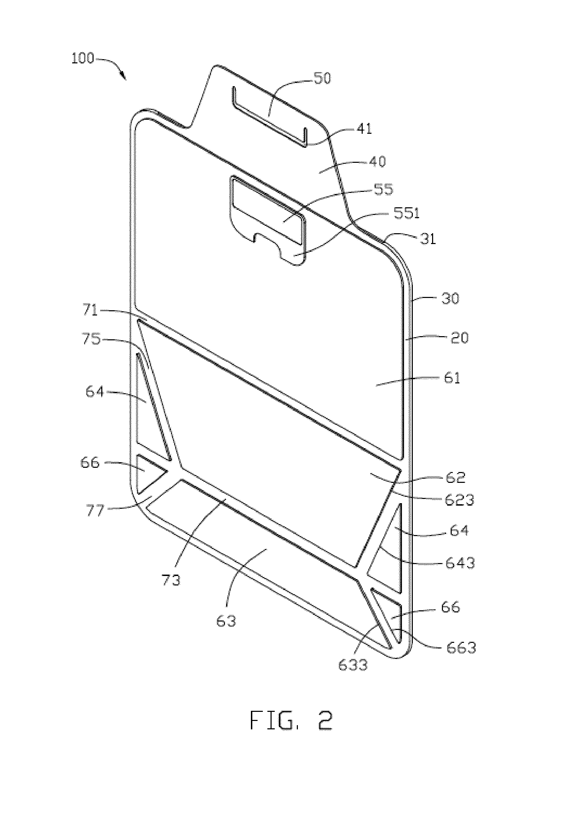

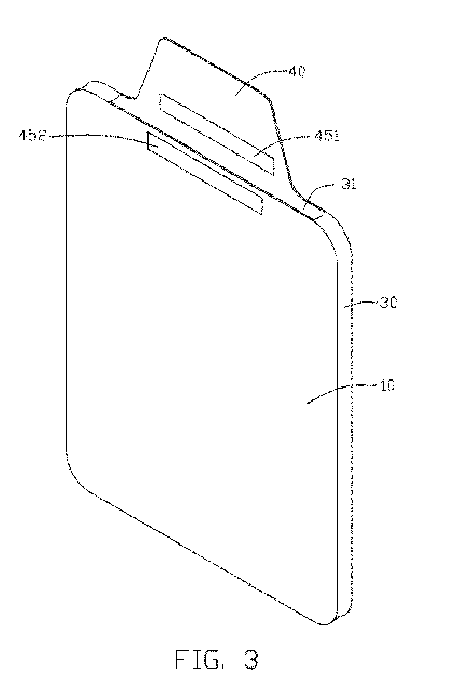

FIGs. 2 and 3 show that the holder 100 includes a first outer sheet 10, a second outer sheet 20, an expandable portion 30, and a covering portion 40. A receiving space (not labeled) is defined between the first outer sheet 10 and the second outer sheet 20 for receiving the portable electronic device 200. The first outer sheet 10 and the second outer sheet 20 are connected to each other along their edges by the expandable portion 30, leaving an entrance 31 that allows the portable electronic device 200 to be inserted into the receiving space. The holder 100 shown herein for illustrative purpose includes the first outer sheet 10 and the expandable portion 30; however, the expandable portion 30 may be omitted and the first and second outer sheets connected to each other along their perimeters. In another example, if the holder 100 is not used for receiving the portable electronic device 200 therein, only one of the first outer sheet 10 and the second outer sheet 20 may also be used. The first outer sheet 10, the expandable portion 30, and the second outer sheet 20 are made of soft material, e.g., fiber, cotton, vinyl, thermoplastics.

The covering portion 40 is flexible and is used to cover the entrance 31. The covering portion 40 may be an extension of the second outer sheet 20. The covering portion 40 is trapezoid-shaped, however, any other shapes may also be used.

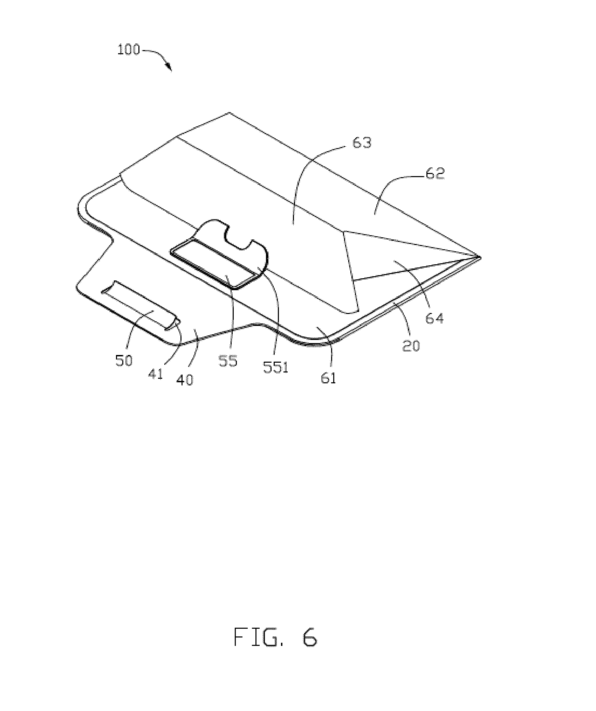

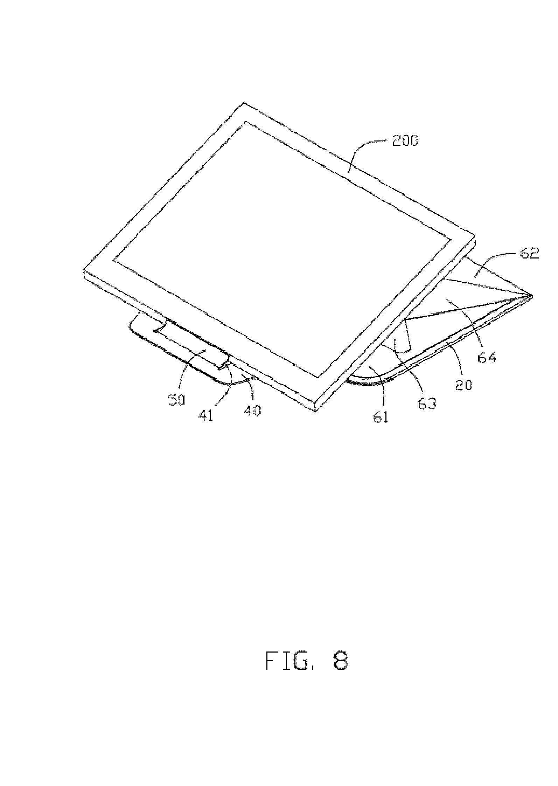

A locking member 45 is configured for retaining the covering portion 40 on the first outer sheet 10 for closing the holder 100. In the exemplary embodiment, the locking member 45 includes a first fastening tape 451 attached on one surface of the covering portion 40, and a second fastening tape 452 attached on the second outer sheet 10. The first fastening tape 451 may be adhered to the second fastening tape 452 for mounting the covering portion 40 to the first outer sheet 10. The covering portion 40 defines a slot 41 on another surface thereof. A tongue portion 50 is formed in the slot 41. One edge of the tongue portion 50 is connected to the covering portion 40. FIGs. 6 and 8 show that the tongue portion 50 may be bent away from the covering portion 40 to allow the portable electronic device 200 to be supported by the tongue portion 50.

FIG. 2 shows that a base plate 61, a first main supporting plate 62, a second main supporting plate 63, two first side supporting plates 64, and two second side supporting plates 66 are formed on the second outer sheet 20. The base plate 61, the four supporting plates 62,63,64 66 are made of rigid material.

In the exemplary embodiment, the base plate 61 is rectangular and adjacent to the covering portion 40. The first main supporting plate 62 is positioned between the base plate 61 and the second main supporting plate 63. In the exemplary embodiment, the first main supporting plate 62 and the second main supporting plate 63 are isosceles trapezoid-shaped. The two first side supporting plates 64 are symmetrically positioned at two sides of the first main supporting plate 62. The two second side supporting plates 64 are symmetrically positioned at two sides of the second main supporting plate 63. A first folding region 71 is positioned between the base plate 61 and the first main supporting plate 62. A second folding region 73 is positioned between the first main supporting plate 62 and the second main supporting plate 63. The first side supporting plates 64 and the second side supporting plates 66 are triangular, and are respectively positioned at two sides of the second folding region 73. The first main supporting plate 62 includes two side edges 623. Each first side supporting plate 64 has a sloping edge 643, which is adjacent to and parallel to one of the side edges 623 of the first main supporting plate 62. The second main supporting plate 63 includes two side edges 633. Each second side supporting plate 66 has a sloping edge 663, which is adjacent to and parallel to one of the side edges 633 of the second main supporting plate 633. Thus, a third folding region 75 is positioned between the first main supporting plate 62 and the first side supporting plate 64, and a fourth folding region 77 is positioned between the second main supporting plate 63 and the second side supporting plate 66.

The base plate 61, the first main supporting plate 62, the second main supporting plate 63, the first side supporting plates 64 and the second side supporting plates 66 can be folded relative to each other along the folding regions 71, 73, 75, 77. However, since the base plate 61, the first main supporting plate 62, the second main supporting plate 63, the first side supporting plates 64 and the second side supporting plates 66 are made of rigid material, the base plate 61, the first main supporting plate 62, the second main supporting plate 63, the first side supporting plates 64 and the second side supporting plates 66 cannot be folded themselves.

The base plate 61 has a latching piece 55 formed thereon adjacent to the covering portion 40. The latching piece 55 has a bendable portion 551. The bendable portion 551 may be bent away the base plate 61 to allow the second main supporting plate 63 to be supported thereon.

FIG.3 shows that when the portable electronic device 200 needs to be received in the holder 100, the covering portion 40 is folded over to uncover the entrance 31. The device 200 can then be inserted into the receiving space of the holder 100 via the entrance 31 for storage. After that, the first fastening tape 451 is adhered to the second fastening tape 452 for mounting the covering portion 40 to the first outer sheet 10.

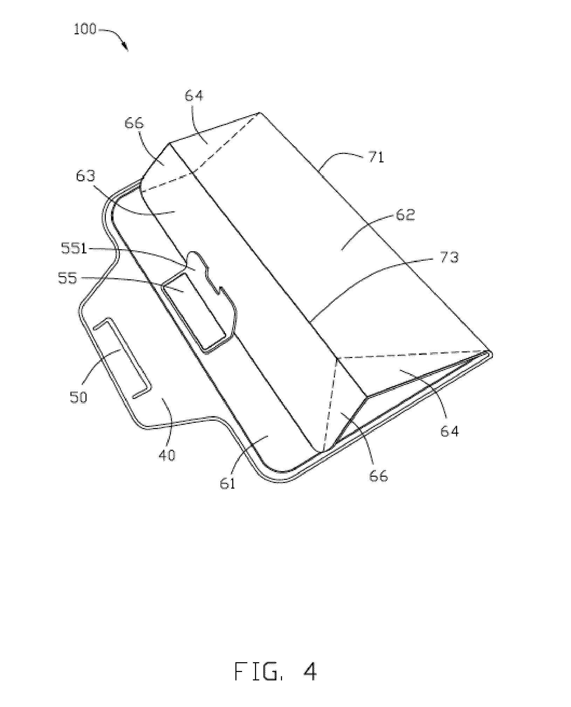

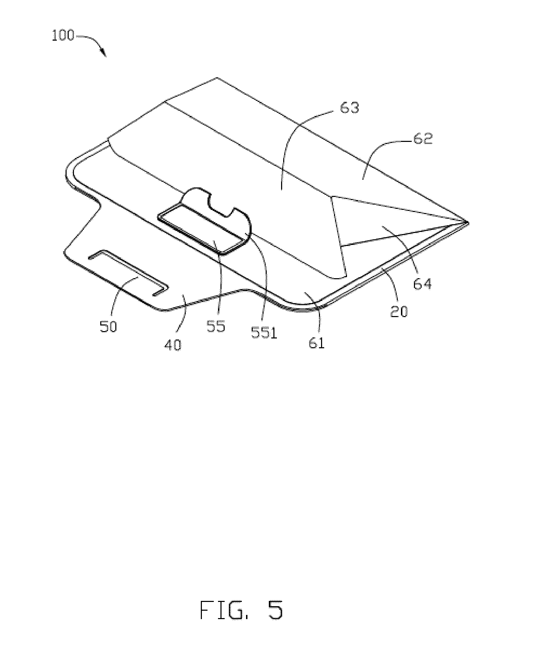

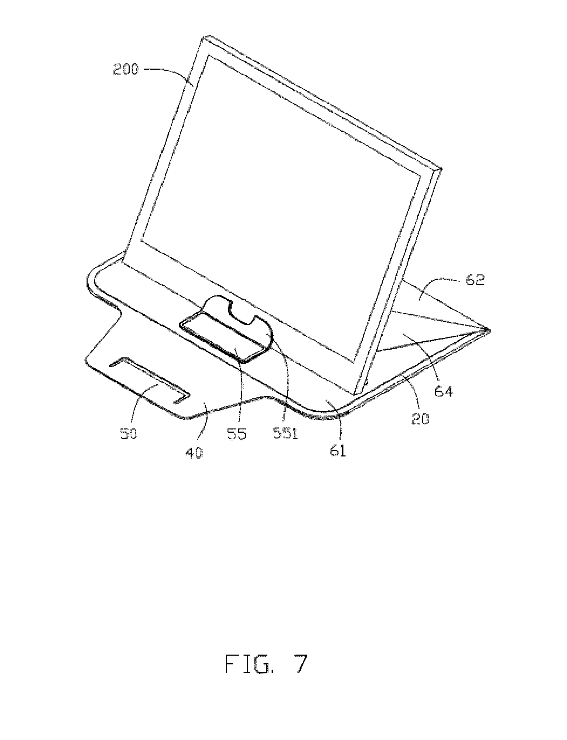

FIGs. 4 and 5 shows that in order to fold the holder 100 to form a support, the first main supporting plate 62 and the second main supporting plate 63 are folded toward the base plate 61 along the first folding region 71 and the second folding region 73 until the second supporting plate 63 stands on the base plate 61. Then, the first side supporting plate 64 and the second side supporting plate 66 at each side of the first main supporting plate 62 and the second main supporting plate 63 is folded along the third folding region 75 and the fourth folding region 77. The bendable portion 551 is bent to allow the second main supporting plate 63 to be supported by the bendable portion 551. The first main first supporting plate 62 is angled with the base plate 61, the second main supporting plate 63are supported by the base plate 61, and each of the first side supporting plates 64 and the second side supporting plates 66 are angled with the first main supporting plate 62 and the second main supporting plate 63. Thus, the base plate 61, the first main supporting plate 62, the second main supporting plate 63, the first side supporting plates 64, and the second side supporting plates 66 can form a three-dimensional structure that will not collapse. FIG. 7 shows that the portable electronic device 200 is set on the holder 100 as a support. One end of the portable electronic device 200 is supported between the bendable portion 551 and the second main supporting plate 62. The portable electronic device 200 is supported by the first main supporting plate 62, the second main supporting plate 63, the first side supporting plates 64, and the second side supporting plates 66 at an angle. Thus, users can comfortably view the display of the portable electronic device 200.

FIGs. 6 and 8 show that if the viewed angled of the portable electronic device 200 needs to be adjusted, the tongue portion 50 can be bent around the edge along a direction away from the covering portion 40. The portable electronic device 200 is held on the tongue portion 50. Thus, users can comfortably view the display of the portable electronic device 200 at a different angle.

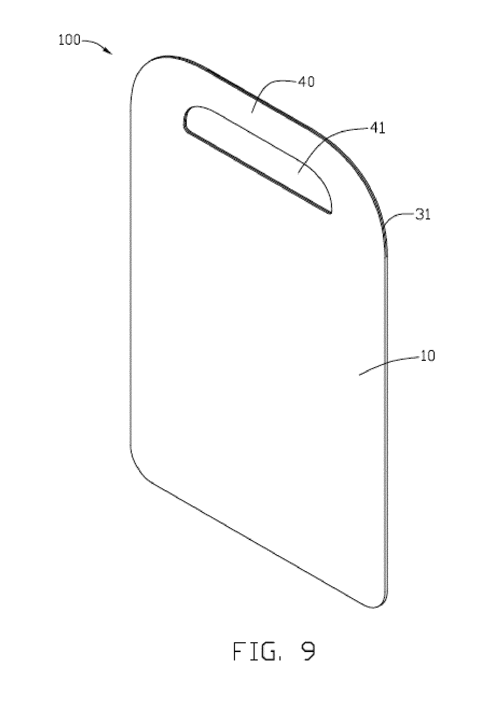

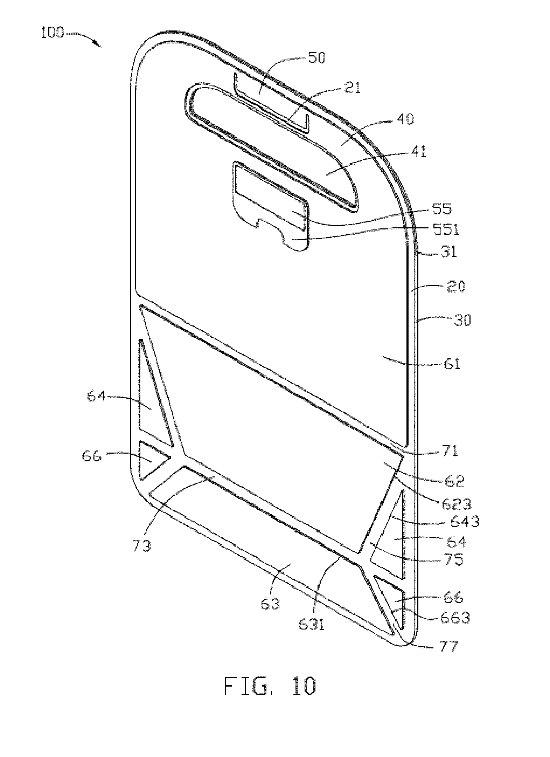

FIGS. 9 and 10 show a second exemplary embodiment of a holder 100. The holder 100 can receive and protect a portable electronic device 200, and can also support and hold the portable electronic device 200.

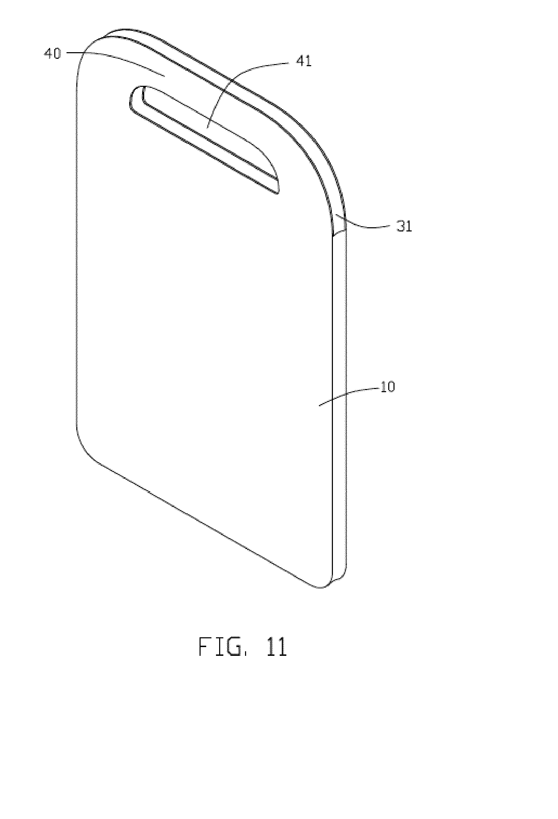

FIGs. 10 and 11 show that the holder 100 includes a first outer sheet 10, a second outer sheet 20, a expandable portion 30, and a handle portion 40. A receiving space (not labeled) is defined between the second outer sheet 20 and the first outer sheet 10 for receiving the portable electronic device 200. The second outer sheet 20 and the first outer sheet 10 are connected to each other along their edges by the expandable portion 30, leaving an entrance 31 that allows the portable electronic device 200 to be inserted into the receiving space. The handle portion 40 includes two extending sheets, one extending sheet extending from the first outer sheet 10 and the other extending sheet extending from the second outer sheet 20. The handle portion 40 defines a through hole 41 passing through the two extending sheets. The through hole 41 makes the holder 100 convenient to carry. To lock the handle portion 40, two attractive magnet members may be attached to the two extending sheets for preventing the portable electronic device 100 from separating from the entrance 31.

The handle portion 40 defines a slot 21 on one side of the through hole 41. A tongue portion 50 is formed in the slot 21. One edge of the tongue portion 50 is connected to the handle portion 40. Referring to FIGs. 6 and 8, the tongue portion 50 may be bent away the handle portion 40 to allow the portable electronic device 200 to be supported by the tongue portion 50.

When the portable electronic device 200 needs to be received in the holder 100, the handle portion 40 is opened to expose the entrance 31. The device 200 can then be inserted into the receiving space of the holder 100 via the entrance 31 for storage.

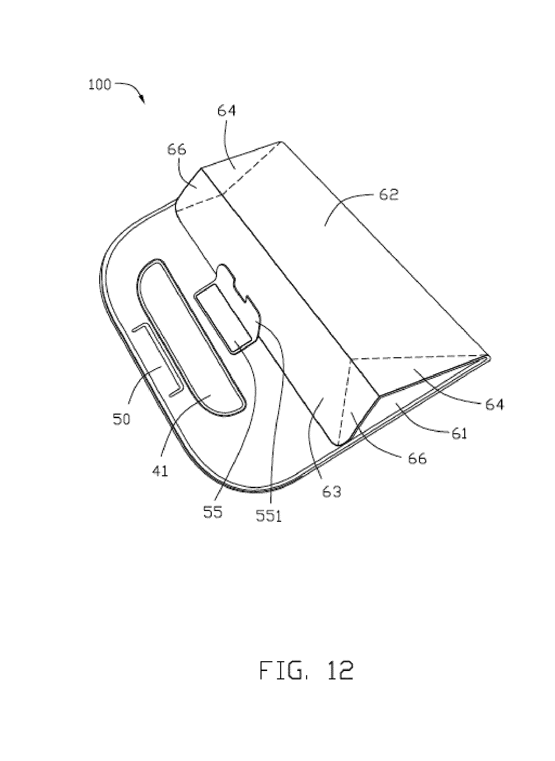

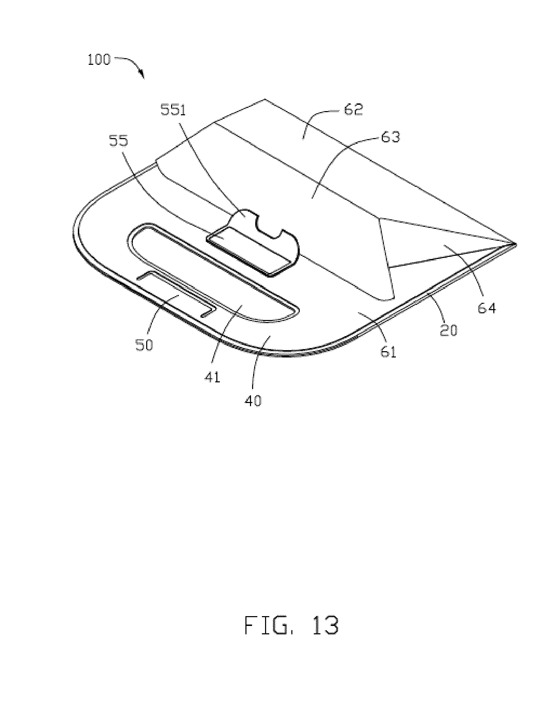

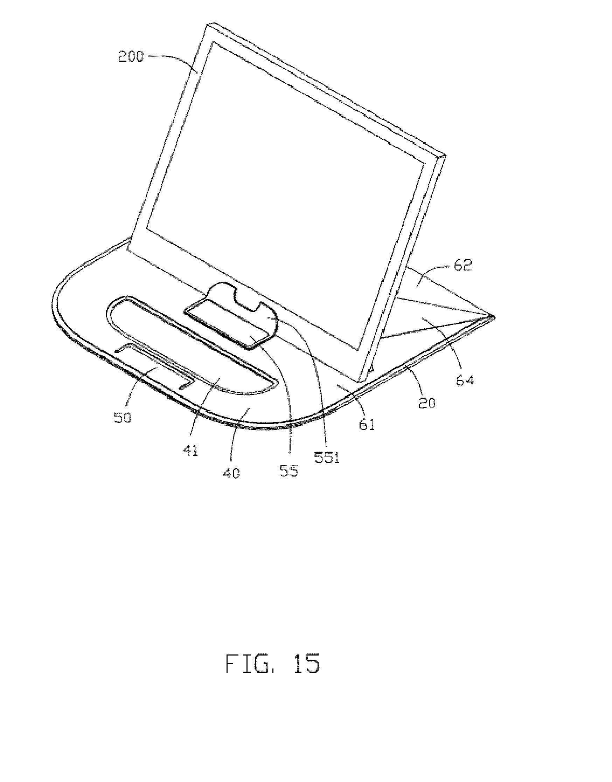

FIGs. 12 and 13 show that in order to fold the holder 100 to form a support, the first main supporting plate 62 and the second main supporting plate 63 are folded toward the base plate 61 along the first folding region 71 and the second folding region 73 until the second main supporting plate 63 stands on the base plate 61. Then, the first side supporting plate 64 and the second side supporting plate 66 at each side of the first main supporting plate 62 and the second main supporting plate 63 is folded along the third folding region 75 and the fourth folding region 77. The bendable portion 551 is folded to allow the second main supporting plate 63 to be supported by the bendable portion 551. The first main first supporting plate 62 is angled with the base plate 61, the second main supporting plate 63 is supported by the base plate 61, and each of the first side supporting plates 64 and the second side supporting plates 66 are angled with the first main supporting plate 62 and the second main supporting plate 63. Thus, the base plate 61, the first main supporting plate 62, the second main supporting plate 63, the first side supporting plates 64, and the second side supporting plates 66 can form a three-dimensional structure that will not collapse. FIG. 15 shows that the portable electronic device 200 is set on the holder 100 as a support. One end of the portable electronic device 200 is supported between the foldable piece 551 and the second main supporting plate 62. The portable electronic device 200 is supported by the first main supporting plate 62, the second main supporting plate 63, the first side supporting plates 64, and the second side supporting plates 66 at an angle. Thus, users can comfortably view the display of the portable electronic device 200.

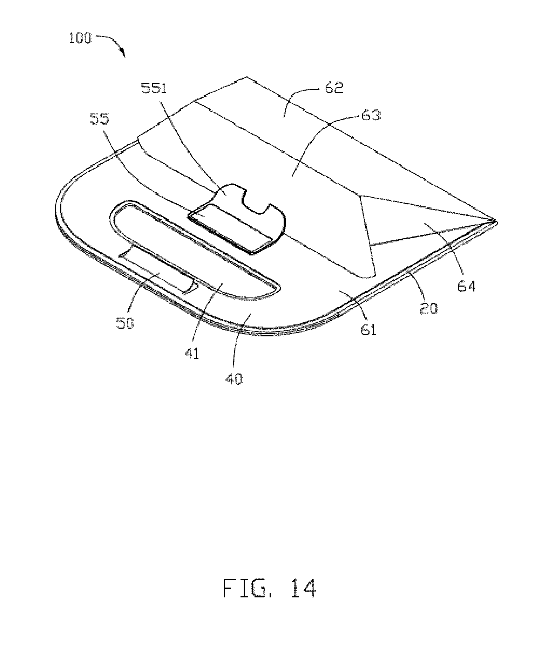

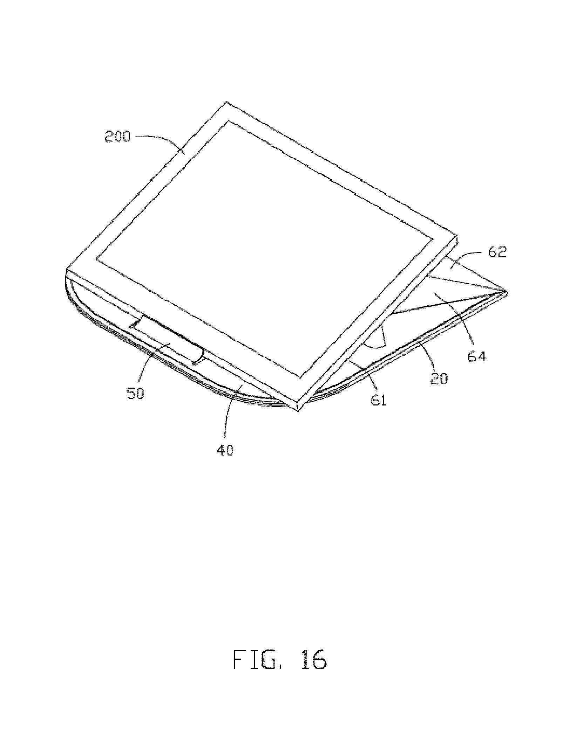

FIGs. 14 and 16 show that if the viewed angled of the portable electronic device 200 needs to be adjusted, the tongue portion 50 can be bent around the edge along a direction far away from the covering portion 40. The portable electronic device 200 is held on the tongue portion 50. Thus, users can comfortably view the display of the portable electronic device 200 at a different angle.

It is to be understood that even though numerous characteristics and advantages of the present embodiments have been set forth in the foregoing description, together with details of the structures and functions of the embodiments, the disclosure is illustrative only, and changes may be made in detail, especially in matters of shape, size, and arrangement of parts within the principles of the disclosure to the full extent indicated by the broad general meaning of the terms in which the appended claims are expressed.

## Claims

1. A holder for holding and supporting a portable electronic device, comprises at least one sheet, **characterized in that**: a base plate, a first main supporting plate, a second main supporting plate, two first side supporting plates, and two second side supporting plates are located on the at least one sheet; the base plate, the first main supporting plate and the second main supporting plate are foldable relative to each other, the two first side supporting plates are symmetrically positioned on opposite sides of the first main supporting plate, the two second side supporting plates are symmetrically positioned on opposite sides of the second main supporting plate, when the holder is folded, the base plate, the first main supporting plate, the second main supporting plate, the first side supporting plates, and the second side supporting plates cooperatively form a three-dimensional structure that can support the portable electronic device at an angle relative to the at least one sheet without collapsing.

2. The foldable holder as claimed in claim 1, **characterized in that**: when folded, the first main first supporting plate is angled with the base plate, the second main supporting plate are non-perpendicularly supported by the base plate, and each of the first side supporting plates and the second side supporting plates are angled with the first main supporting plate and the second main supporting plate.

3. The foldable holder as claimed in claims 1 or 2, **characterized in that**: a first folding region is formed between the base plate and the first main supporting plate, a second folding region is formed between the first main supporting plate and the second main supporting plate, a third folding region is positioned between the first main supporting plate and the first side supporting plate, and a fourth folding region is positioned between the second main supporting plate and the second side supporting plate.

4. The foldable holder as claimed in claims 1 or 2, **characterized in that**: the at least one sheet further comprises two sheets, a receiving space is formed between the two sheets for receiving the portable electronic device, an entrance is defined between the two sheets and communicate with the receiving space, the entrance allows the portable electronic device to be inserted into the receiving space.

5. The foldable holder as claimed in claim 4, **characterized in that**: the holder comprises a covering portion extending from one of the two sheets configured for covering the entrance.

6. The foldable holder as claimed in claim 5, **characterized in that**: the covering portion defines a slot, and a tongue portion is formed in the slot, one edge of the tongue portion is connected to the covering portion, the tongue portion is bent around the edge along a direction far away from the covering portion to allow the portable electronic device to be supported by the tongue portion.

7. The foldable holder as claimed in claims 4, **characterized in that**: the holder comprises a handled portion extending from the two sheets, the handled portion defines a through hole for being handled.

8. The foldable holder as claimed in claim 7, **characterized in that**: the handled portion defines a slot at one side of the through hole, and a tongue portion is formed in the slot, one edge of the tongue portion is connected to the handled portion, the tongue portion is bent away from the handled portion to allow the portable electronic device to be supported on the tongue portion.

9. The foldable holder as claimed in claim 4, **characterized in that:** the two sheets are made from one or more materials selected from a group consisting of fiber, cotton, vinyl, thermoplastics.

10. A foldable holder for holding and supporting a portable electronic device, comprises a first outer sheet and a second outer sheet connected to the first outer sheet, a receiving space is formed between the second outer sheet and the first outer sheets for receiving the portable electronic device, an entrance is defined to communicate with the receiving space, the entrance allows the portable electronic device to be inserted into the receiving space, **characterized in that**: a base plate, a first main supporting plate, a second main supporting plate, two first side supporting plates, and two second side supporting plates are located on the second outer sheet; the base plate, the first main supporting plate and the second main supporting plate are folded relative to each other, the two first side supporting plates are symmetrically positioned on opposite sides of the first main supporting plate, the two second side supporting plates are symmetrically positioned on opposite sides of the second main supporting plate; a latching piece is formed on the base plate, the latching piece has a bendable portion; the first main supporting plate, the second main supporting plate, the two first side supporting plates, and the two second side supporting plates are folded relative to each other until the second main supporting plate is held by the latching piece, the first main supporting plate, the second main supporting plate, the two first side supporting plates, and the two second side supporting plates cooperatively form a three-dimensional structure that can support the portable electronic device at an angle relative to the second outer sheet without collapsing.

11. The foldable holder as claimed in claim 10, **characterized in that**: the holder includes a covering portion, the covering portions extends from one of the first outer sheet and the second outer sheet and is configured for covering the entrance.

12. The foldable holder as claimed in claim 10, **characterized in that**: the holder comprises a handled portion extending from the first outer sheet and the second outer sheet, the handled portion defines a through hole for being handled, the handle portion defines a slot at one side of the through hole, and a tongue portion is formed in the slot, one edge of the tongue portion is connected to the handled portion, the tongue portion is bent around the edge along a direction far away from the handle portion to allow the portable electronic device to be held on the tongue portion.

13. The foldable holder as claimed in claims 10, 11 or 12, **characterized in that**: a first folding region is formed between the base plate and the first main supporting plate, a second folding region is formed between the first main supporting plate and the second main supporting plate, a third folding region is positioned between the first main supporting plate and the first side supporting plate, and a fourth folding region is positioned between the second main supporting plate and the second side supporting plate.
